Europäisches Patentamt

European Patent Office

Office européen des brevets

(11) Publication number: 0 346 917
A2

# EUROPEAN PATENT APPLICATION

(21) Application number: 89110941.5

(51) Int. Cl.⁴: G06F 13/28

(22) Date of filing: 16.06.89

(30) Priority: 17.06.88 US 207873

(43) Date of publication of application:
20.12.89 Bulletin 89/51

(84) Designated Contracting States:
DE FR GB

(71) Applicant: **Modular Computer Systems Inc.**
**Box 60 99 1650 West McNab Road**
**Fort Lauderdale Fl 33310(US)**

(72) Inventor: **Earnshaw, William E.**
**961 SW 81 Terr**
**N. Lauderdale, Florida 33068(US)**
Inventor: **McKinney, Steven J.**
**4126 NW 78 Ln.**
**Coral Springs, Florida 33065(US)**

(74) Representative: **Vogl, Leo, Dipl.-Ing.**
**AEG Aktiengesellschaft Theodor-Stern-Kai 1**
**D-6000 Frankfurt am Main 70(DE)**

(54) Bus stealing method for concurrent CPU and I/O processing.

(57) This invention provides for the most amount of concurrency of I/O and CPU processing by adding an intelligent hardware circuit which controls memory bus ownership between the CPU and DMA controllers. This intelligent circuitry monitors CPU requests for main memory access and externally negates the I/O device's DREQ request signal. This in turn temporarily halts the I/O transfer, and allows the CPU to steal a bus cycle in the middle of an I/O transfer burst.

TYPICAL CACHED CONFIGURATION

FIG.1

EP 0 346 917 A2

## Bus Stealing Method for Concurrent CPU and I/O Processing

### Background of the Invention

This Invention generally relates to an apparatus for allowing concurrent CPU and I/O processing in a microprocessor based computer systems.

In a typical microprocessor based computer system, the CPU accesses memory for instruction fetches and data storage and retrieval. When high performance I/O processing is required, for instance in real time computer systems, it is common to offload this processing from the CPU by adding a Direct Memory Access (DMA) controller. This controller is capable of directly accessing the main memory in order to transfer blocks of data to and from I/O devices.

Since the CPU and DMA controller both access the main memory through a common system bus, handshake signals are used to establish which device is the bus owner during any given bus cycle. When an I/O device wishes to transfer data to or from the main memory, it signals the DMA controller by activating a DREQ line. The DMA controller will then signal the CPU by asserting the HOLD signal. At the completion of the current machine cycle, the CPU will give up the system bus and signal the DMA controller with the HLDA line. The DMA controller then owns the system bus until it has finished the I/O transfer and de-asserts the HOLD signal.

In the case of large blocks of I/O data, the CPU can be prevented from accessing the main memory for thousands of bus cycles. During this time, CPU processing is halted.

In systems requiring greater CPU performance, it is common to add an additional small high speed memory called CACHE. The CACHE memory contains a copy of a small portion of the main memory. When the CPU needs to read memory data, it accesses the CACHE if the data is contained in the CACHE. This condition is called a CACHE read hit. If the data is not in the CACHE, the CPU will access the main memory, and the CACHE will be updated to contain this data and the adjacent data. When the CPU writes data to a location not contained in CACHE, the data is written to main memory. When the location being written exists in the CACHE, both CACHE memory and main memory are written. This condition is called write through.

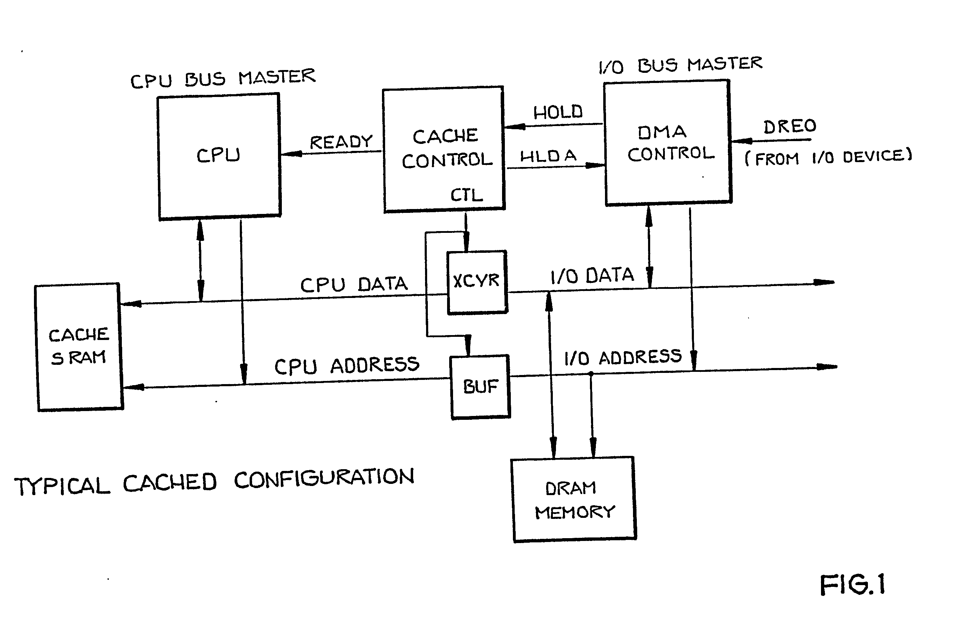

There are a wide variety of CACHE sizes, organizations, and coherency algorithms commonly implemented which are designed to reduce the amount of time that the CPU must spend accessing the main memory. Since the main memory resides on a separate bus, when the CPU is not accessing it, it is free to be used by other bus owners i.e., DMA controllers as shown in Fig. 1.

A CACHE controller is used to keep track of which locations are contained in the CACHE, and make requests to main memory when required. The HOLD and HLDA handshake signals in this configuration allow the CACHE controller to grant main memory bus ownership to the DMA controller when the CPU is not accessing the main memory.

This allows concurrency of CPU and I/O processing when the CPU gets CACHE read hits. However, on CACHE misses and write throughs, the CPU must wait until any ongoing DMA transfer is complete.

Again, this may involve thousands of bus cycles, during which CPU processing is held.

There are several data transfer modes which can be implemented by DMA controllers. These include single transfer, block transfer, and demand transfer modes.

In single transfer mode, one data transfer is performed by the DMA controller at a time. The HOLD/HLDA handshake sequence is performed for each transfer. This mode allows the CPU to gain bus ownership in between any single DMA transfer. However, it is the slowest method of data transfer and the handshake overhead reduces I/O proccessing performance.

The BSL then de-asserts the STEAL 8 signal which causes the DREO it signal to be re-asserted. The DMA controller 40 will re assert HOLD 4, and at the assertion of HLDA 7 by the BSL 30 will read the transfer state previously stored internally, and continue the I/O data transfer from the point it was interrupted. The BSL 30 has effectively stolen a bus cycle in the middle of an I/O transfer burst.

When the memory bus 2 is not owned by either the CPU or the DMA controller 40, the BSL 30 will grant access to any request for memory access based on a first come first served basis. In the case of simultaneeous requests by the CPU 10 and DMA controller 40, the CPU will be granted ownership.

The BSL circuitry is implemented with a single standard programmable logic device (PAL) containing two inputs which monitor the states of the HOLD requests 4 and 5, and which generates four outputs HLDA 6 and 7, STEAL 8 and the buffer 70 control, based on the above described states.

The machine language instructions for causing the various read and write operations, the loading and unloading of various registers and the enabling and disenabling operations depend on the type of microprocessor used. These instructions will be obvious to those skilled in the art of microprocessor programming. Therefore it is unnecessary to provide a comprehensive list of micro code instructions.

In block transfer mode, the DMA process continues until the transfer byte count reaches ∅. The process is initiated by a request line which need by active only until the first transfer is complete. The byte count is preprogrammed in an internal DMA controller register. This mode provides the best I/O performance, but has the greatest impact on CPU performance due to long wait times while large blocks of data are transfered.

In demand transfer mode, the DMA process continues until the requesting I/O device de-asserts the line. This mode provides the most flexible handshake procedure allowing I/O devices to access memory in small irregular bursts. However, the CPU may still be required to wait for long periods during I/O transfer bursts. This bursting technique provides the best compromised CPU and I/O performance, but gives control of memory bus ownership to the I/O devices.

Summary of the Invention

In light of the above mentioned difficulties with known prior art methods and computer architecture for handling access of CPU and I/O processing to main memory provide a method and computer architecture which by seperating I/O processing from CPU processing allows full concurrency of I/O and CPU processing. This and still other objects of the present invention are met by providing a computer system with a CPU, a main memory, a support controller, a direct memory access controller, one or several I/O devices and a common bus, wherein a bus steal logic is provided, which, when during I/O data transfer to said main memory said CPU requires access to said main memory, sends a first signal to said direct memory access controller which causes direct memory access controller to halt said I/O data transfer and a second signal to said support controller which gives said CPU access to said main memory. The present invention provides for the most amount of concurrency of I/O and CPU processing by adding an intelligent hardware circuit which controls memory bus ownership between the CPU and DMA controllers. This intelligent circuitry monitors CPU requests for main memory access and externally negates the I/O device's DREQ request signal. This in turn temporarily halts the I/O transfer, and allows the CPU to steal a bus cycle in the middle of an I/O transfer burst. The invention will be more specifically described with relation to a preferred embodiment which is illustrated in the appended drawing.

Brief Description of the Drawings

Figure 1 shows a block circuit diagram of a computer-system according prior art architecture.

Figure 2 shows a block circuit diagram of a microprocessor based computer system incorporating a bus stealing scheme for concurrent CPU ans I/O processing contructed in accordance with an embodiment of the present invention.

Description of the Preferred Embodiment

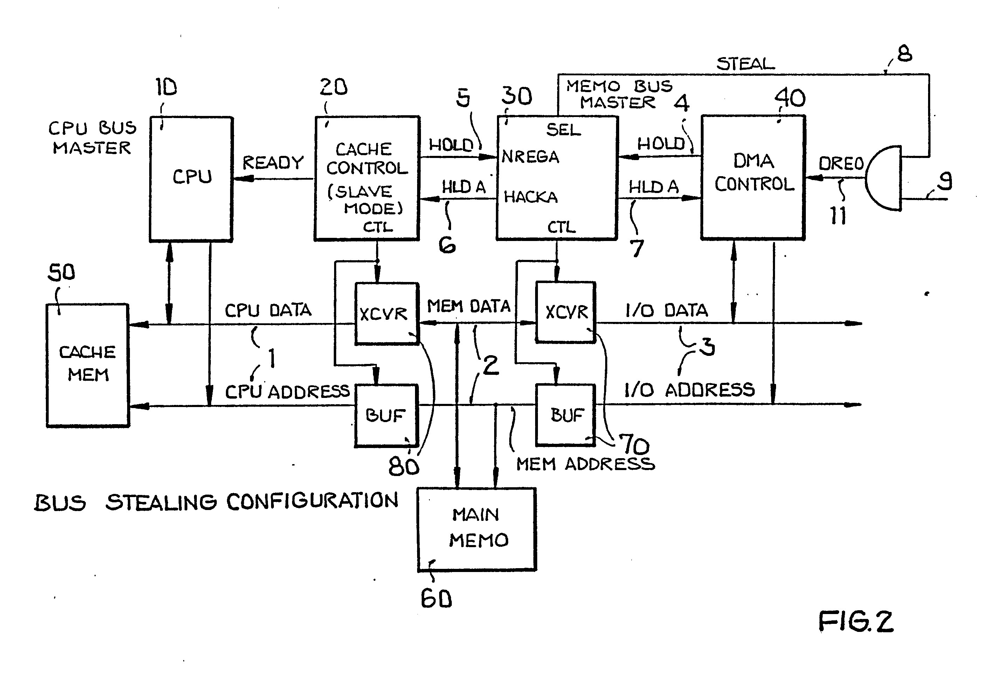

Figure 2 illustrates a block circuit according to the invention consisting of the intelligent bus stealing logic (BSL) 30 as the memory bus controller in a micro-processor based computer system.

The main memory bus 2 is separated from the CPU bus 1 and the I/O bus 3. The CPU bus elements consist of the microprocessor 10, the CACHE controller 20, and the CACHE memory 50. As long as the CPU gets CACHE read hits, it only accesses the CPU bus 1. During this time, the CACHE controller 20 does not request access to the memory bus 2, and the HOLD request line 5 is inactive.

When an I/O device requests a transfer it informs the DMA controller 40 by asserting the DREQX line 9. The DMA controller then requests access to main memory 60 by asserting the HOLD signal 4. With no CPU request pending, the BSL will acknowledge the request with HLDA 7, and activate the bus buffers 70 allowing the DMA controller 40 to own the memory bus 2. The DMA controller 40 is programmed for demand tranfer mode, and will own the memory bus until the byte count expires or the DREQ 11 is de-asserted.

If during this I/O transfer burst, the CPU 10 encounters a CACHE miss or requires a write through to main memory, the CACHE controller 20 will request access to the memory bus 2. The CACHE controller 20 is programmed to operate in slave mode in which case it will assert HOLD 5 to request ownership of the bus. The BSL 30 will then assert the STEAL 8 signal which de-asserts the DREQ 11 signal. The DMA controller 40 has been programmed to perform demand mode transfers, and monitors the state of the DREQ 11 signal during every I/O data transfer. When the DREQ 11 is de-asserted befor the byte count expires, the DMA controller finishes the current transfer, and internally stores the state of the DMA operation. The internal registers store the initial byte count, the current byte count, the address of the I/O device, and the next memory address to be accessed. The DMA controller 40 then suspends the I/O transfer and de-asserts HOLD 4. The BSL 30 then de-asserts HLDA 7 disables the two buffers 70, and asserts HLDA 6 acknowledging the CACHE controller's request. The cache controller then enables the buffers 80 and allows the CPU 10 to own the memory bus 2 long enough to perform the read or write operation.

At the end of the read or write operation, the CACHE controller 20 will disable the buffers 80, and de-assert HLDA 6. At this point the memory bus 2 is again isolated from the CPU bus 1, and is available to continue the DMA transfer in process.

## Claims

1. A computer system with a CPU, a main memory, a support controller, a direct memory access controller, one or several I/O devices and a common bus, wherein a bus steal logic is provided, which, when during I/O data transfer to said main memory said CPU requires access to said main memory, sends a first signal to said direct memory access controller which causes direct memory access controller to halt said I/O data transfer and a second signal to said support controller which gives said CPU access to said main memory.

2. A computer system as defined in claim 1 wherein a cache memory is attached to said CPU, said support controller is a cache controller and said common bus consists of a CPU-bus, memory bus and 1/O-bus.

3. A computer system as defined in claim 1 wherein said bus steal logic comprises two inputs and four outputs.

4. A computer system as defined in claim 1, wherein a logical device is provided which comprises:
a request input for receiving first request signals from said I/O devices,
a steal input for receiving steal signals from said bus steal logic,
a request output for sending second request signals to said direct memory access controller
and wherein through the logical combination of said steal signals said first request signals said second request signal is transmitted to said direct memory access controller if one of said I/O devices requires access and said CPU has no access to said main memory.

5. A computer system as described in claim 4, comprising:
a DMA request input port to receive said second request signals;
a hold output port to send hold signals to said bus steal logic when said second request signals are received;
a hold acknowledge input port to receive hold acknowledge signals send by said bus steal logic.

6. A computer system as described in claim 5, which sends said steal signal to said logical device when said support controller requires access for said CPU to said main memory and connects said I/O bus with said memory bus by control signal, comprising:
a hold request input port 8 to receive said holdsignals from said direct memory access controller;
a hold acknowledge output port B to send said hold acknowledge signals to said direct memory access controller;
a hold request input port A to receive hold signals from said support controller;
a hold acknowledge output port A to send hold acknowledge signals to said support controller;
a control output port to send a control signal to a device which connects said memory bus to said I/O-bus;
a steal output port to send said steal signals to said logical device;

7. A computer system as described in claim 6, which sends a hold signal to said hold request input port A of said bus steal logic if said CPU requires access to said main memory and connects said CPU bus with said memory bus by control signal, comprising:
a hold output port to send said hold signals to said bus steal logic;
a hold acknowledge input port to receive said hold acknowledge signals from said bus steal logic;
a ready output port to send ready signal to said CPU;
a control output port to send a control signal to a device which connects said memory bus with said CPU-bus.

TYPICAL CACHED CONFIGURATION

FIG.1

BUS STEALING CONFIGURATION

FIG.2

EP 0 346 917 A2